(19) Europäisches Patentamt
European Patent Office
Office européen des brevets

(11) EP 4 579 770 A1

(12) EUROPEAN PATENT APPLICATION
published in accordance with Art. 153(4) EPC

(43) Date of publication:
02.07.2025 Bulletin 2025/27

(51) International Patent Classification (IPC):
H01M 4/04 (2006.01)   H01M 4/133 (2010.01)

(21) Application number: 22960225.5

(52) Cooperative Patent Classification (CPC):
H01M 4/04; H01M 4/133; Y02E 60/10

(22) Date of filing: 30.09.2022

(86) International application number:
PCT/CN2022/123059

(87) International publication number:
WO 2024/065597 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Ningde Amperex Technology Limited
Ningde, Fujian 352100 (CN)

(72) Inventors:
• YAN, Yi
  Ningde, Fujian 352100 (CN)
• DONG, Jiali
  Ningde, Fujian 352100 (CN)
• XIE, Yuansen
  Ningde, Fujian 352100 (CN)

(74) Representative: Icosa
83 avenue Denfert-Rochereau
75014 Paris (FR)

(54) NEGATIVE ELECTRODE MATERIAL, SECONDARY BATTERY, AND ELECTRICAL APPARATUS

(57) A negative electrode material is provided. The negative electrode material comprises a carbon-based material. As tested in a nitrogen adsorption-desorption test, the negative electrode material satisfies: 0.004 cm$^3$/g $\leq$ S $\leq$ 0.030 cm$^3$/g, wherein S is an adsorption volume of pores with a pore diameter of 3 nm to 35 nm in the negative electrode material. In a charge-discharge test of a button battery prepared by using lithium as a negative electrode and using the negative electrode material as a positive electrode, a gravimetric capacity of the negative electrode material measured when the button battery is discharged to a voltage of -5 mV is denoted as Cap A, and the gravimetric capacity of the negative electrode material measured when the button battery is discharged to a voltage of 5 mV is denoted as Cap B, satisfying: 10 mAh/g $\leq$ Cap A - Cap B $\leq$ 20 mAh/g. The negative electrode material of this application possesses a high gravimetric capacity, and can effectively increase the energy density of a secondary battery containing the negative electrode material.

Box plot of comparative embodiments and embodiments

FIG. 1

EP 4 579 770 A1

**Description**

**TECHNICAL FIELD**

This application relates to the field of energy storage, and in particular, to a negative electrode material, a secondary battery, and an electronic device.

**BACKGROUND**

With the electrochemical devices such as lithium-ion batteries having become widely used energy systems, the fast-charge/discharge becomes an important research topic. Therefore, the development of energy systems of superior charge-discharge performance is essential for the large-scale application of the electrochemical devices in transportation, power grids, wind energy systems, and solar energy systems.

However, fast-charge/discharge incurs some problems. For example, when a lithium-ion battery is charged or discharged at a large C-rate, an internal resistance of the battery itself leads to a rapid rise in temperature during the charge or discharge, thereby enormously impairing the cycle performance and safety performance of the battery. Existing methods for reducing the internal resistance of a battery are mainly to reduce the coating thickness of an electrode plate and reduce the particle size of a negative active material. However, such methods obviously reduce the energy density and durability of the battery cell and are costly. Therefore, it is extremely necessary to develop a negative electrode material of a low internal resistance and a high energy density.

**SUMMARY**

In view of the above problems in the prior art, this application provides a negative electrode material and a secondary battery containing the negative electrode material to improve the capacity of the negative electrode material, and in turn, increase the energy density of the secondary battery containing the negative electrode material.

According to a first aspect, this application provides a negative electrode material. The negative electrode material comprises a carbon-based material. As tested in a nitrogen adsorption-desorption test, the negative electrode material satisfies: $0.004 \text{ cm}^3/\text{g} \leq S \leq 0.030 \text{ cm}^3/\text{g}$, wherein S is an adsorption volume of pores with a pore diameter of 3 nm to 35 nm in the negative electrode material. In a charge-discharge test of a button battery prepared by using lithium as a negative electrode and using the negative electrode material as a positive electrode, a gravimetric capacity of the negative electrode material measured when the button battery is discharged to a voltage of -5 mV is denoted as Cap A, and the gravimetric capacity of the negative electrode material measured when the button battery is discharged to a voltage of 5 mV is denoted as Cap B, satisfying: $10 \text{ mAh/g} \leq \text{Cap A - Cap B} \leq 20 \text{ mAh/g}$. The adsorption volume of the pores of 3 nm to 35 nm in diameter characterizes the number of mesopores in the structure of the negative electrode material. A larger adsorption volume indicates a higher percentage of the mesopores and a higher porosity of the negative electrode material, thereby enhancing adsorption-induced lithiation of active ions and increasing the capacity of the negative electrode material. However, excessive pores may adversely affect the performance such as the first-cycle Coulombic efficiency and the cycle performance of the secondary battery. The Cap A-Cap B value of the negative electrode material is related to the defect lithiation of the negative electrode material. By controlling the adsorption volume of the pores of 3 nm to 35 nm in diameter in the negative electrode material and the Cap A-Cap B value to fall within the above ranges, this application can further increase the capacity of adsorption-induced lithiation and defect lithiation of the negative electrode material, and increase the capacity of the secondary battery. In some embodiments, $0.006 \text{ cm}^3/\text{g} \leq S \leq 0.025 \text{ cm}^3/\text{g}$. In some embodiments, $14 \text{ mAh/g} \leq \text{Cap A - Cap B} \leq 18 \text{ mAh/g}$.

In some embodiments, as tested in a Raman test, the negative electrode material satisfies: $0.2 \leq I_d/I_g \leq 0.5$, wherein $I_d$ is an intensity of a peak at 1350 cm$^{-1}$ in a Raman spectrum, and $I_g$ is an intensity of a peak at 1580 cm$^{-1}$ in the Raman spectrum. The $I_d/I_g$ ratio characterizes the defect degree of the negative electrode material. The higher the $I_d/I_g$ ratio, the higher the defect degree. A high defect degree increases the deintercalation channels of active ions and improves the deintercalation speed of active ions, thereby improving the kinetic performance of the negative electrode material. However, excessive defects may lead to a decline in the performance of the secondary battery in terms of the first-cycle Coulombic efficiency, cycle performance, storage performance, and the like. When the value of the $I_d/I_g$ ratio falls within the above range, the secondary battery can exhibit good kinetics without significantly reducing the performance in terms of the first-cycle Coulombic efficiency, the cycle performance, and the like. In some embodiments, $0.3 \leq I_d/I_g \leq 0.5$.

In some embodiments, as tested by the X-ray diffractometry, an average stacking thickness of the negative electrode material along an a-axis direction is $L_a$, satisfying: $100 \text{ nm} \leq L_a \leq 140 \text{ nm}$. $L_a$ represents an average size of the crystals of the negative electrode material along the a-axis direction. The higher the value of $L_a$, the larger the amount of the intercalated lithium and the amount of the stored lithium. However, when the value of $L_a$ is unduly high, the gravimetric capacity of the negative electrode material is increased, but the cycle performance of the material will decline. The value of

$L_a$ of the negative electrode material of this application falls within the above range. Therefore, the negative electrode material achieves a high gravimetric capacity without significantly reducing the cycle performance. In some embodiments, $110 \, nm \leq L_a \leq 140 \, nm$.

In some embodiments, a specific surface area of the negative electrode material is 2 cm$^2$/g to 15 cm$^2$/g. The smaller the specific surface area of the negative electrode material, the smaller the contact area of the negative electrode material in contact with the electrolyte solution, thereby reducing the active ions consumed in initially forming the SEI film of the secondary battery, and improving the first-cycle Coulombic efficiency. However, when the specific surface area is deficient, the infiltration effect of the electrolyte solution is low, and the active ions are hardly diffusible, thereby impairing the kinetic performance of the secondary battery. The specific surface area of the negative electrode material of this application falls within the above range. Therefore, the secondary battery achieves a high first-cycle Coulombic efficiency without significantly reducing the kinetic performance. In some embodiments, a specific surface area of the negative electrode material is 4 cm$^2$/g to 10 cm$^2$/g.

In some embodiments, the powder compaction density of the negative electrode material pressed with a force equivalent to 5 tons is 1.7 g/cm$^3$ to 2.2 g/cm$^3$. The powder compaction density represents the compressibility of the negative electrode material being pressed. The higher the powder compaction density, the more compressible the material being pressed, and the higher the volumetric energy density of the secondary battery. The powder compaction density of the negative electrode material of this application falls within the above range. Therefore, the secondary battery containing the negative electrode material achieves a high energy density. In some embodiments, the powder compaction density of the negative electrode material pressed with a force equivalent to 5 tons is 1.8 g/cm$^3$ to 2.1 g/cm$^3$.

In some embodiments, $D_{v50}$ of the negative electrode material satisfies: $5 \, \mu m \leq D_{v50} \leq 26 \, \mu m$. The higher the $D_{v50}$ of the negative electrode material, the higher the corresponding gravimetric capacity. However, an unduly high value thereof affects the kinetic performance. The value of $D_{v50}$ of the negative electrode material of this application falls within the above range, thereby endowing the negative electrode material with a relatively high gravimetric capacity but without significantly reducing the kinetic performance. In some embodiments, $10 \, \mu m \leq D_{v50} \leq 20 \, \mu m$.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: $1 \leq C_{004}/C_{110} \leq 5$. The $C_{004}/C_{110}$ ratio is a parameter that reflects the orientation index of the crystals of the negative electrode material. The higher the $C_{004}/C_{110}$ ratio, the higher the orientation index of the crystals, and the fewer the directions in which the active ions are deintercalated in the negative electrode material. The lower the $C_{004}/C_{110}$ ratio, the lower the orientation index of the crystals, and the more the directions in which the active ions are deintercalated in the negative electrode material. The $C_{004}/C_{110}$ ratio of the negative electrode material of this application falls within the above range, so that the active ions can be rapidly de-intercalated from the negative electrode material, thereby further improving the discharge rate performance of the secondary battery. In some embodiments, $1 \leq C_{004}/C_{110} \leq 3$.

In some embodiments, a method for preparing the carbon-based material comprises: making one or more of natural graphite or artificial graphite into a graphitic composite material, and then spheroidizing, coating, and carbonizing the graphitic composite material.

In some embodiments, a process of preparing the graphitic composite material comprises: Dissolving one or more of natural graphite or artificial graphite and polymethylmethacrylate (PMMA) simultaneously in N-N dimethylformamide (DMF), stirring the solution at a temperature of 50 °C to 80 °C for 10 h to 14 h, filtering the solution and collecting sediment, washing the sediment with deionized water and ethanol for 2 to 4 times, and drying the sediment thoroughly at a temperature of 60 °C to 90 °C to obtain a graphitic composite material precursor; heating the graphitic composite material precursor in a tube furnace until 1000 °C to 1200 °C at a heating rate of 8 °C/min to 16 °C/min; subsequently, passing a gas of $CH_4$, $C_2H_2$, and $H_2$ mixed at the mixing ratio of (5 to 10): (5 to 10): (80 to 85) into the tube furnace; keeping the temperature for 8 h to 12 h, and then naturally cooling the precursor to a room temperature to obtain a graphitic composite material.

In some embodiments, the spheroidization process comprises: Applying continuous impact forces, compression forces, and shear forces from a turntable, an inner wall, and particle interstices to the mixture containing both the graphitic composite material and a dispersant solution, so as to spheroidize the graphitic composite material. In some embodiments, the spheroidization duration is 10 min to 20 min. In some embodiments, the impact forces, compression forces, and shear forces are applied to the mixture by using a spheroidization apparatus, thereby impacting, rubbing, shearing, bending, and folding the mixture, and in turn, removing the angular corner of the graphitic composite material and, at the same time, fixing micropowder onto larger particles. In some embodiments, the spheroidization apparatus is a mixing granulator. In some embodiments, the rotation speed of the spheroidization apparatus is 30 Hz to 50 Hz.

In some embodiments, the dispersant solution is an aqueous solution of carboxymethyl cellulose (CMC). In some embodiments, the mass percent of the carboxymethyl cellulose in the dispersant solution is 0.5% to 2%. In some embodiments, based on the mass of the graphitic composite material, the mass percent of the dispersant solution is 5% to 20%.

In some embodiments, the coating process comprises: Coating the spheroidized graphitic composite material with pitch. In some embodiments, based on the mass of the spheroidized graphitic composite material, the mass percent of the pitch is 2% to 15%. In some embodiments, the carbonization treatment is performed at a temperature of 900 °C to 1500 °C.

According to a second aspect, this application provides a secondary battery. The secondary battery comprises a negative electrode. The negative electrode comprises a negative current collector and a negative active material layer disposed on at least one surface of the negative current collector. The negative active material layer comprises the negative electrode material according to the first aspect.

In some embodiments, the negative electrode further comprises a conductive coating layer located between the negative active material layer and the negative current collector. In some embodiments, the conductive coating layer comprises at least one of carbon fibers, Ketjen black, acetylene black, carbon nanotubes, or graphene. The conductive coating layer serves to conduct electrons, and reduces the charge transfer resistance significantly, thereby further enhancing the kinetic performance of the secondary battery. In some embodiments, the thickness of the conductive coating layer is 0.5 $\mu$m to 1.2 $\mu$m.

According to a third aspect, this application provides an electronic device. The electronic device comprises the secondary battery according to the second aspect.

## BRIEF DESCRIPTION OF DRAWINGS

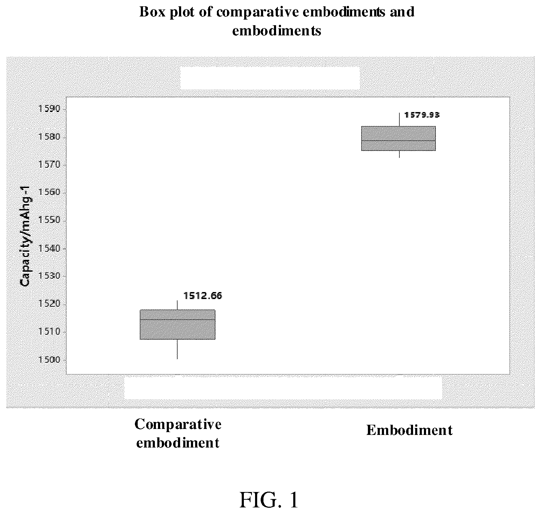

FIG. 1 shows a capacity of a lithium-ion battery according to Embodiment 6 and Comparative Embodiment 1 of this application.

## DETAILED DESCRIPTION OF EMBODIMENTS

For brevity, some specific value ranges are disclosed herein. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" comprises this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may comprise a single component or a plurality of components. The item B may comprise a single component or a plurality of components. The item C may comprise a single component or a plurality of components.

The following describes this application in more detail with reference to specific embodiments. Understandably, the specific embodiments are merely intended to illustrate this application but not intended to limit the scope of this application.

## I. Negative electrode material

This application provides a negative electrode material. The negative electrode material comprises a carbon-based material. As tested in a nitrogen adsorption-desorption test, the negative electrode material satisfies: $0.004 \text{ cm}^3/\text{g} \leq S \leq 0.030 \text{ cm}^3/\text{g}$, wherein S is an adsorption volume of pores with a pore diameter of 3 nm to 35 nm in the negative electrode material. In a charge-discharge test of a button battery prepared by using lithium as a negative electrode and using the negative electrode material as a positive electrode, a gravimetric capacity of the negative electrode material measured when the button battery is discharged to a voltage of -5 mV is denoted as Cap A, and the gravimetric capacity of the negative electrode material measured when the button battery is discharged to a voltage of 5 mV is denoted as Cap B, satisfying: 10 mAh/g $\leq$ Cap A - Cap B $\leq$ 20 mAh/g. The adsorption volume of the pores of 3 nm to 35 nm in diameter characterizes the number of mesopores in the structure of the negative electrode material. A larger adsorption volume indicates a higher percentage of the mesopores and a higher porosity of the negative electrode material, thereby enhancing adsorption-induced lithiation of active ions and increasing the capacity of the negative electrode material.

However, excessive pores may adversely affect the performance such as the first-cycle Coulombic efficiency and the cycle performance of the secondary battery. The Cap A-Cap B value of the negative electrode material is related to the defect lithiation of the negative electrode material. By controlling the adsorption volume of the pores of 3 nm to 35 nm in diameter in the negative electrode material and the Cap A-Cap B value to fall within the above ranges, this application can further increase the capacity of adsorption-induced lithiation and defect lithiation of the negative electrode material, and increase the capacity of the secondary battery. In some embodiments, S is 0.005 $cm^3/g$, 0.008 $cm^3/g$, 0.01 $cm^3/g$, 0.011 $cm^3/g$, 0.012 $cm^3/g$, 0.013 $cm^3/g$, 0.014 $cm^3/g$, 0.015 $cm^3/g$, 0.016 $cm^3/g$, 0.017 $cm^3/g$, 0.018 $cm^3/g$, 0.019 $cm^3/g$, 0.02 $cm^3/g$, 0.021 $cm^3/g$, 0.022 $cm^3/g$, 0.023 $cm^3/g$, 0.024 $cm^3/g$, 0.025 $cm^3/g$, 0.026 $cm^3/g$, 0.027 $cm^3/g$, 0.028 $cm^3/g$, 0.029 $cm^3/g$, or a value falling within a range formed by any two thereof. In some embodiments, 0.006 $cm^3/g \leq$ S $\leq$ 0.025 $cm^3/g$.

In some embodiments, Cap A-Cap B is 10.5 mAh/g, 11 mAh/g, 11.5 mAh/g, 12 mAh/g, 12.5 mAh/g, 13 mAh/g, 13.5 mAh/g, 14.5 mAh/g, 15 mAh/g, 15.5 mAh/g, 16 mAh/g, 16.5 mAh/g, 17 mAh/g, 17.5 mAh/g, 18.5 mAh/g, 19 mAh/g, 19.5 mAh/g, or a value falling within a range formed by any two thereof. In some embodiments, 14 mAh/g $\leq$ Cap A - Cap B $\leq$ 18 mAh/g.

The components of the button battery used in this application are as follows:

Negative electrode: A lithium sheet used as a negative electrode.
Positive electrode: 97 wt% graphite, 1.5 wt% sodium carboxymethyl cellulose (CMC), and 1.5 wt% styrene-butadiene rubber (SBR) used as a positive active material layer, and a copper foil used as a current collector.
Electrolyte solution: the lithium salt is 12.5 wt% $LiPF_6$, and the solvent is ethylene carbonate (EC), propylene carbonate (PC), ethyl methyl carbonate (EMC), and diethyl carbonate (DEC) mixed at a mass ratio of 1: 3: 3: 3, doped with 2 wt% fluoroethylene carbonate and 2 wt% 1,3-propane sultone.

The button battery used in this application is subjected to a charge-discharge test in the following process: Putting the button battery onto a LAND tester to perform a test in the following process: Discharging the button battery at a current of 0.05 C until the voltage reaches -5 mV, and leaving the button battery to stand for 5 min, discharging the button battery at a current of 0.05 mA until the voltage reaches -5 mV, discharging the button battery at a current of 0.01 mA until the voltage reaches -5 mV, and then charging the button battery at a current of 0.1 C until the voltage reaches 2.0 V, so as to obtain a charge capacity, and finally, dividing the charge capacity by the mass of the active material to obtain the gravimetric capacity of the negative electrode material, denoted as Cap A. Dividing the charge capacity by the discharge capacity to obtain a first-cycle Coulombic efficiency.

Putting the button battery onto a LAND tester to perform a test in the following process: Discharging the button battery at a current of 0.05 C until the voltage reaches 5 mV, and leaving the button battery to stand for 5 min, discharging the button battery at a current of 0.05 mA until the voltage reaches 5 mV, discharging the button battery at a current of 0.01 mA until the voltage reaches 5 mV, and then charging the button battery at a current of 0.1 C until the voltage reaches 2.0 V, so as to obtain a charge capacity, and finally, dividing the charge capacity by the mass of the active material to obtain the gravimetric capacity of the negative electrode material, denoted as Cap B. Dividing the charge capacity by the discharge capacity to obtain a first-cycle Coulombic efficiency.

In some embodiments, as tested in a Raman test, the negative electrode material satisfies: $0.2 \leq I_d/I_g \leq 0.5$, wherein $I_d$ is an intensity of a peak at 1350 $cm^{-1}$ in a Raman spectrum, and $I_g$ is an intensity of a peak at 1580 $cm^{-1}$ in the Raman spectrum. The $I_d/I_g$ ratio characterizes the defect degree of the negative electrode material. The higher the $I_d/I_g$ ratio, the higher the defect degree. A high defect degree increases the deintercalation channels of active ions and improves the deintercalation speed of active ions, thereby improving the kinetic performance of the negative electrode material. However, excessive defects may lead to a decline in the performance of the secondary battery in terms of the first-cycle Coulombic efficiency, cycle performance, storage performance, and the like. When the value of the $I_d/I_g$ ratio falls within the above range, the secondary battery can exhibit good kinetics without significantly reducing the performance in terms of the first-cycle Coulombic efficiency, the cycle performance, and the like. In some embodiments, the $I_d/I_g$ ratio is 0.23, 0.25, 0.27, 0.29, 0.33, 0.35, 0.37, 0.4, 0.43, 0.45, 0.47, or a value falling within a range formed by any two thereof. In some embodiments, $0.3 \leq I_d/I_g \leq 0.5$.

In some embodiments, as tested by the X-ray diffractometry, an average stacking thickness of the negative electrode material along an a-axis direction is $L_a$, satisfying: 100 nm $\leq L_a \leq$ 140 nm. $L_a$ represents an average size of the crystals of the negative electrode material along the a-axis direction. The higher the value of $L_a$, the larger the amount of the intercalated lithium and the amount of the stored lithium. However, when the value of $L_a$ is unduly high, the gravimetric capacity of the negative electrode material is increased, but the cycle performance of the material will decline. The value of $L_a$ of the negative electrode material of this application falls within the above range. Therefore, the negative electrode material achieves a high gravimetric capacity without significantly reducing the cycle performance. In some embodiments, $L_a$ is 100 nm, 103 nm, 105 nm, 107 nm, 110 nm, 113 nm, 115 nm, 117 nm, 120 nm, 123 nm, 125 nm, 127 nm, 130 nm, 133 nm, 135 nm, 137 nm, or a value falling within a range formed by any two thereof. In some embodiments, 110 nm $\leq L_a \leq$ 140 nm.

In some embodiments, a specific surface area of the negative electrode material is 2 cm$^2$/g to 15 cm$^2$/g. The smaller the specific surface area of the negative electrode material, the smaller the contact area of the negative electrode material in contact with the electrolyte solution, thereby reducing the active ions consumed in initially forming the SEI film of the secondary battery, and improving the first-cycle Coulombic efficiency. However, when the specific surface area is deficient, the infiltration effect of the electrolyte solution is low, and the active ions are hardly diffusible, thereby impairing the kinetic performance of the secondary battery. The specific surface area of the negative electrode material of this application falls within the above range. Therefore, the secondary battery achieves a high first-cycle Coulombic efficiency without significantly reducing the kinetic performance. In some embodiments, the specific surface area of the negative electrode material is 3 cm$^2$/g, 4.5 cm$^2$/g, 5 cm$^2$/g, 5.5 cm$^2$/g, 6 cm$^2$/g, 6.5 cm$^2$/g, 7 cm$^2$/g, 7.5 cm$^2$/g, 8 cm$^2$/g, 8.5 cm$^2$/g, 9 cm$^2$/g, 9.5 cm$^2$/g, or a value falling within a range formed by any two thereof. In some embodiments, a specific surface area of the negative electrode material is 4 cm$^2$/g to 10 cm$^2$/g.

In some embodiments, the powder compaction density of the negative electrode material pressed with a force equivalent to 5 tons is 1.7 g/cm$^3$ to 2.2 g/cm$^3$. The powder compaction density represents the compressibility of the negative electrode material being pressed. The higher the powder compaction density, the more compressible the material being pressed, and the higher the volumetric energy density of the secondary battery. The powder compaction density of the negative electrode material of this application falls within the above range. Therefore, the secondary battery containing the negative electrode material achieves a high energy density. In some embodiments, the powder compaction density of the negative electrode material pressed with a force equivalent to 5 tons is 1.72 g/cm$^3$, 1.74 g/cm$^3$, 1.76 g/cm$^3$, 1.78 g/cm$^3$, 1.82 g/cm$^3$, 1.84 g/cm$^3$, 1.86 g/cm$^3$, 1.88 g/cm$^3$, 1.9 g/cm$^3$, 1.92 g/cm$^3$, 1.94 g/cm$^3$, 1.96 g/cm$^3$, 1.98 g/cm$^3$, 2.0 g/cm$^3$, 2.02 g/cm$^3$, 2.04 g/cm$^3$, 2.06 g/cm$^3$, 2.08 g/cm$^3$, 2.12 g/cm$^3$, 2.14 g/cm$^3$, 2.16 g/cm$^3$, 2.18 g/cm$^3$, or a value falling within a range formed by any two thereof. In some embodiments, the powder compaction density of the negative electrode material pressed with a force equivalent to 5 tons is 1.8 g/cm$^3$ to 2.1 g/cm$^3$.

In some embodiments, $D_{v50}$ of the negative electrode material satisfies: $5 \mu m \leq D_{v50} \leq 26 \mu m$. The higher the $D_{v50}$ of the negative electrode material, the higher the corresponding gravimetric capacity. However, an unduly high value thereof affects the kinetic performance. In some embodiments, $D_{v50}$ is 6 $\mu$m, 8 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 21 $\mu$m, 22 $\mu$m, 23 $\mu$m, 24 $\mu$m, 25 $\mu$m, or a value falling within a range formed by any two thereof. The value of $D_{v50}$ of the negative electrode material of this application falls within the above range, thereby endowing the negative electrode material with a relatively high gravimetric capacity but without significantly reducing the kinetic performance. In some embodiments, $10 \mu m \leq D_{v50} \leq 20 \mu m$. In this application, $D_{v50}$ is a particle diameter value at which 50% of the particles of the negative electrode material are smaller than this value in a volume-based particle size distribution.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: $1 \leq C_{004}/C_{110} \leq 5$. The $C_{004}/C_{110}$ ratio is a parameter that reflects the orientation index of the crystals of the negative electrode material. The higher the $C_{004}/C_{110}$ ratio, the higher the orientation index of the crystals, and the fewer the directions in which the active ions are deintercalated in the negative electrode material. The lower the $C_{004}/C_{110}$ ratio, the lower the orientation index of the crystals, and the more the directions in which the active ions are deintercalated in the negative electrode material. The $C_{004}/C_{110}$ ratio of the negative electrode material of this application falls within the above range, so that the active ions can be rapidly de-intercalated from the negative electrode material, thereby further improving the discharge rate performance of the secondary battery. In some embodiments, the $C_{004}/C_{110}$ ratio is 1.2, 1.4, 1.6, 1.8, 2.3, 2.5, 2.7, 3.0, 3.3, 3.5, 3.7, 4.0, 4.3, 4.5, 4.7, or a value falling within a range formed by any two thereof. In some embodiments, $1 \leq C_{004}/C_{110} \leq 3$.

In some embodiments, a method for preparing the carbon-based material comprises: making one or more of natural graphite or artificial graphite into a graphitic composite material, and then spheroidizing, coating, and carbonizing the graphitic composite material.

In some embodiments, a process of preparing the graphitic composite material comprises: Dissolving one or more of natural graphite or artificial graphite and polymethylmethacrylate (PMMA) simultaneously in N-N dimethylformamide (DMF), stirring the solution at a temperature of 50 °C to 80 °C for 10 h to 14 h, filtering the solution and collecting sediment, washing the sediment with deionized water and ethanol for 2 to 4 times, and drying the sediment thoroughly at a temperature of 60 °C to 90 °C to obtain a graphitic composite material precursor; heating the graphitic composite material precursor in a tube furnace until 1000 °C to 1200 °C at a heating rate of 8 °C/min to 16 °C/min; subsequently, passing a gas of $CH_4$, $C_2H_2$, and $H_2$ mixed at the mixing ratio of (5 to 10): (5 to 10): (80 to 85) into the tube furnace; keeping the temperature for 8 h to 12 h, and then naturally cooling the precursor to a room temperature to obtain a graphitic composite material.

In some embodiments, the spheroidization process comprises: Applying continuous impact forces, compression forces, and shear forces from a turntable, an inner wall, and particle interstices to the mixture containing both the graphitic composite material and a dispersant solution, so as to spheroidize the graphitic composite material. In some embodiments, the spheroidization duration is 10 min to 20 min, for example, 12 min, 14 min, 16 min, or 18 min. In some embodiments, the impact forces, compression forces, and shear forces are applied to the mixture by using a spheroidization apparatus, thereby impacting, rubbing, shearing, bending, and folding the mixture, and in turn, removing the angular corner of the graphitic composite material and, at the same time, fixing micropowder onto larger particles. In some embodiments, the spheroidization apparatus is a mixing granulator. In some embodiments, the rotation speed of the spheroidization apparatus is 30 Hz to 50 Hz, for example, 35 Hz, 40 Hz, or 45 Hz.

In some embodiments, the dispersant solution is an aqueous solution of carboxymethyl cellulose (CMC). In some embodiments, the mass percent of the carboxymethyl cellulose in the dispersant solution is 0.5% to 2%, for example, 0.7%, 1.0%, 1.3%, 1.5%, or 1.7%. In some embodiments, based on the mass of the graphitic composite material, the mass percent of the dispersant solution is 5% to 20%, for example, 7%, 10%, 13%, 15%, 17%, or 19%.

In some embodiments, the coating process comprises: Coating the spheroidized graphitic composite material with pitch. In some embodiments, based on the mass of the spheroidized graphitic composite material, the mass percent of the pitch is 2% to 15%, for example, 3%, 4%, 5%, 6%, 7%, 8%, 9%, 10%, 11%, 12%, 13%, or 14%. In some embodiments, the temperature of carbonization is 900 °C to 1500 °C, for example, 950 °C, 1000 °C, 1050 °C, 1100 °C, 1150 °C, 1200 °C, 1250 °C, 1300 °C, 1350 °C, 1400 °C, or 1450 °C. In some embodiments, the duration of carbonization is 3 h to 10 h, for example, 4 h, 5 h, 6 h, 7 h, 8 h, or 9 h.

## II. Secondary battery

The secondary battery according to this application comprises a negative electrode. The negative electrode comprises a negative current collector and a negative active material layer disposed on at least one surface of the negative current collector. The negative active material layer comprises the negative electrode material according to the first aspect.

In some embodiments, the negative electrode further comprises a conductive coating layer located between the negative active material layer and the negative current collector. In some embodiments, the conductive coating layer comprises at least one of carbon fibers, Ketjen black, acetylene black, carbon nanotubes, or graphene. The conductive coating layer serves to conduct electrons, and reduces the charge transfer resistance significantly, thereby further enhancing the kinetic performance of the secondary battery. In some embodiments, the thickness of the conductive coating layer is 0.5 μm to 1.2 μm. In some embodiments, the thickness of the conductive coating layer is 0.6 μm, 0.7 μm, 0.8 μm, 0.9 μm, 1.0 μm, 1.1 μm, or a value falling within a range formed by any two thereof.

In some embodiments, the negative current collector comprises: copper foil, aluminum foil, nickel foil, stainless steel foil, titanium foil, foamed nickel, foamed copper, a conductive-metal-clad polymer substrate, or any combination thereof.

In some embodiments, the negative active material layer further comprises a binder and a conductive agent. In some embodiments, the binder comprises, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

In some embodiments, the conductive agent comprises, but is not limited to, a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fibers, copper, nickel, aluminum, or silver. In some embodiments, the conductive polymer is a polyphenylene derivative.

The secondary battery according to this application further comprises a positive electrode. The positive electrode comprises a positive current collector and a positive active material layer. The positive active material layer comprises a positive active material, a binder, and a conductive agent.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

According to some embodiments of this application, the positive active material comprises at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder comprises a binder polymer, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binders comprise at least one of polyethylene, polypropylene, polyvinyl ester, polyvinyl alcohol, or polyacrylic acid. In some embodiments, the conductive agent comprises a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof.

The secondary battery according to this application further comprises a separator. The material and the shape of the separator used in the secondary battery according to this application are not particularly limited, and may be based on any technology disclosed in the prior art. In some embodiments, the separator comprises a polymer or an inorganic compound or the like formed from a material that is stable to the electrolyte solution disclosed in this application.

For example, the separator may comprise a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer comprises inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer comprises a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The secondary battery according to this application further comprises an electrolyte solution. The electrolyte solution applicable to this application may be an electrolyte solution known in the prior art.

According to some embodiments of this application, the electrolyte solution comprises an organic solvent, a lithium salt, and optionally an additive. The organic solvent in the electrolyte solution of this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent comprises, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent comprises an ether solvent, such as at least one of 1,3-dioxane (DOL) or ethylene glycol dimethyl ether (DME). In some embodiments, the lithium salt comprises at least one of an organic lithium salt or an inorganic lithium salt. In some embodiments, the lithium salt comprises, but is not limited to: lithium hexafluorophosphate (LiPF$_6$), lithium tetrafluoroborate (LiBF$_4$), lithium difluoropho-sphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bis(oxalate) borate LiB(C$_2$O$_4$)$_2$ (LiBOB), or lithium difluoro(oxalate)borate LiBF$_2$(C$_2$O$_4$) (LiDFOB). In some embodiments, the additive comprises at least one of fluoroethylene carbonate or adiponitrile.

According to some embodiments of this application, the secondary battery according to this application comprises, but is not limited to: a lithium-ion battery or a sodium-ion battery. In some embodiments, the secondary battery is a lithium-ion battery.

### III. Electronic device

This application further provides an electronic device. The electronic device comprises the secondary battery according to the second aspect of this application.

The electronic device or apparatus according to this application is not particularly limited. In some embodiments, the electronic devices of this application comprise, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Unless otherwise expressly specified, reagents, materials, and instruments used in the following embodiments and comparative embodiments are all commercially available.

### Embodiments and Comparative Embodiments

**Embodiment 1**

**Preparing a negative electrode material**

Dissolving 95 grams of artificial graphite together with 5 grams of polymethyl methacrylate (PMMA) in 100 mL of N-N dimethylformamide (DMF), and stirring the solution at 70 °C for 12 hours. Filtering the solution and collecting sediment, washing the sediment with deionized water and ethanol for 2 times, and drying the sediment thoroughly at 80 °C to obtain a graphitic composite material precursor. Heating the graphitic composite material precursor in a tube furnace until 1100 °C at a heating rate of 10 °C/min. Subsequently, passing a gas of $CH_4$, $C_2H_2$, and $H_2$ mixed at a mixing ratio of 5: 10: 85 into the tube furnace. Keeping the temperature for 10 h, and then naturally cooling the precursor to a room temperature to obtain a finished graphitic composite material. Mixing the graphitic composite material with 10 wt% CMC aqueous solution in which the solid content is 1%. Spheroidizing the mixture for 15 min by using a spheroidization device at a rotation speed of 40 Hz. Coating the spheroidized mixture with 5 wt% pitch. Finally, heating the coated mixture to 1000 °C at a rate of 5 °C/min, keeping the temperature for 5 h, and then naturally cooling the coated mixture to a room temperature to obtain a carbon-based material, that is, a negative electrode material.

**Preparing a negative electrode**

Mixing the negative electrode material, styrene-butadiene rubber (SBR for short) as a binder, and sodium carboxymethyl cellulose (CMC for short) as a thickener at a mass ratio of 97: 1.5: 1.5, and then adding an appropriate amount of deionized water solvent and stirring well to form a homogeneous negative electrode slurry. Applying the slurry onto a current collector copper foil already coated with a 1 μm-thick conductive coating layer, and performing oven-drying and cold-pressing to obtain a negative electrode plate.

**Preparing a positive electrode**

Mixing lithium cobalt oxide (chemical formula: $LiCoO_2$) as a positive active material, acetylene black as a conductive agent, and polyvinylidene difluoride (PVDF for short) as a binder at a mass ratio of 96.3: 2.2: 1.5 in an appropriate amount of N-methyl-pyrrolidone (NMP for short) solvent, and stirring well to form a homogeneous positive electrode slurry. Coating a current collector aluminum foil with the slurry, and performing oven-drying and cold-pressing to obtain a positive electrode plate.

**Preparing an electrolyte solution**

Mixing ethylene carbonate (EC), propylene carbonate (PC), ethyl methyl carbonate (EMC), and diethyl carbonate (DEC) in a dry argon atmosphere glovebox at a mass ratio of EC: PC: EMC: DEC = 1: 3: 3: 3. Adding fluoroethylene carbonate and 1,3-propane sultone, dissolving and stirring the mixture well, and then adding a lithium salt $LiPF_6$, and mixing well to obtain an electrolyte solution. The mass percent of the $LiPF_6$ is 12.5%, the mass percent of the fluoroethylene carbonate is 2%, and the mass percent of the 1,3-propane sultone is 2%, based on the mass of the electrolyte solution.

**Preparing a lithium-ion battery**

Stacking the positive electrode, the separator (porous polythene polymer film), and the negative electrode sequentially in such a way that the separator is located between positive electrode and the negative electrode to serve a separation function, and then winding the stacked structure to obtain an electrode assembly. Welding tabs to the electrode assembly, and then putting the electrode assembly into an outer package made of an aluminum laminated film foil. Injecting the above-prepared electrolyte solution into the dried electrode assembly, and performing steps such as vacuum packaging, standing, chemical formation, shaping, and capacity test to obtain a pouch-type lithium-ion battery.

**Embodiments 2 to 10 and Comparative Embodiments 1 to 3**

**Preparing a negative electrode material**

The preparation process of the negative electrode material is similar to that in Embodiment 1, but differs in that the corresponding negative electrode material is prepared by adjusting the parameters in the preparation process such as the ratio between the carbon-based material and the PMMA, the rotation speed of the spheroidization device, the carbonization temperature, and the temperature holding time. Specific preparation parameters are shown in Table a.

**Table a**

| Embodiments and comparative embodiments | Ratio between carbon-based material and PMMA | Rotation speed of spheroidization device (Hz) | Percentage of residual carbon in coating pitch (%) | Carbonization temperature (°C) |
|---|---|---|---|---|
| Embodiment 1 | 95: 5 | 40 | 5 | 1000 |
| Embodiment 2 | 90: 10 | 50 | 6 | 950 |
| Embodiment 3 | 85: 15 | 45 | 7 | 1050 |
| Embodiment 4 | 95: 5 | 35 | 8 | 1100 |
| Embodiment 5 | 90: 10 | 50 | 9 | 1150 |
| Embodiment 6 | 85: 15 | 45 | 10 | 1200 |
| Embodiment 7 | 95: 5 | 40 | 11 | 1250 |
| Embodiment 8 | 90: 10 | 35 | 12 | 1300 |
| Embodiment 9 | 85: 15 | 50 | 13 | 1400 |
| Embodiment 10 | 85: 15 | 45 | 14 | 1500 |
| Comparative Embodiment 1 | 100: 0 | 40 | 5 | 1000 |
| Comparative Embodiment 2 | 98: 2 | 40 | 5 | 950 |
| Comparative Embodiment 3 | 50: 50 | 40 | 5 | 1500 |

The preparation processes of the positive electrode, electrolyte solution, lithium-ion battery are the same as those in Embodiment 1.

**Embodiments 11 to 20**

**Preparing a negative electrode material**

The preparation process of the negative electrode material is similar to that in Embodiment 6, but differs in that the $I_d/I_g$ ratio of the negative electrode material is adjusted by adjusting the percentage of residual carbon in the coating pitch. In the preparation processes in Embodiments 11 to 20, the percentage of residual carbon in the coating pitch is 14%, 12.5%, 3.5%, 6.5%, 9.5%, 11%, 5%, 8%, 15%, and 2%, respectively.
The preparation processes of the positive electrode, electrolyte solution, lithium-ion battery are the same as those in Embodiment 6.

**Embodiments 21 to 30**

**Preparing a negative electrode material**

The preparation process of the negative electrode material is similar to that in Embodiment 12, but differs in that the $L_a$ value of the negative electrode material is adjusted by adjusting the heating rate in the carbonization process. In the preparation process in Embodiments 21 to 30, the heating rate in the carbonization process is 9 °C/min, 9.5 °C/min, 4.5 °C/min, 6.5 °C/min, 8 °C/min, 2.5 °C/min, 10 °C/min, 5 °C/min, 8.5 °C/min, and 1.5 °C/min, respectively.
The preparation processes of the positive electrode, electrolyte solution, lithium-ion battery are the same as those in Embodiment 12.

**Embodiments 31 to 44**

The preparation process of the negative electrode material is similar to that in Embodiment 26, but differs in that the specific surface area of the negative electrode material is adjusted by adjusting the coking value of the pitch, the $C_{004}/C_{110}$ ratio of the negative electrode material is adjusted by adjusting the solid content of the CMC solution, and the compaction density of the negative electrode material is adjusted by adjusting the duration of spheroidization.
The preparation processes of the positive electrode, electrolyte solution, lithium-ion battery are the same as those in Embodiment 26.

**Test Methods**

1. Testing the pore size distribution of the negative electrode material

1) Weighing out 20 to 30 grams of negative electrode material as a specimen, pressing the specimen, weighing out 1.5 to 3.5 grams of the pressed specimen, and putting the pressed specimen into a specimen tube.
2) Degassing the specimen at 200 °C for 2 hours.
3) Passing high-purity nitrogen into the specimen tube so that the specimen adsorbs the nitrogen at a liquid nitrogen temperature until saturation of the adsorption.
4) Extracting data from a resulting $N_2$ adsorption-desorption curve with reference to a BJH model to obtain a BJH cumulative pore volume distribution curve, and calculating the adsorption volume corresponding to the pores of pore sizes falling within different ranges.

2. Testing the powder compaction density of the negative electrode material

The powder compaction density is determined with reference to the standard GB/T 24533-2009 *Graphite Negative Electrode Materials for Lithium-ion Batteries.* A specific test method is:

Weighing out 1.0000±0.0500 gram of a negative electrode material as a specimen, putting the specimen into a CARVER#3619 (13 mm) test mold, and then putting test mold with the specimen into a SUNSTEST UTM7305 instrument. Applying a pressure equivalent to 0.3 t, 0.5 t, 0.75 t, 1.0 t, 1.5 t, 2.0 t, 2.5 t, 3.0 t, 4.0 t, and 5.0 t, separately, wherein the pressure increase rate is 10 mm/min, the duration of keeping the increased pressure is 30 s, the pressure relief rate is 30 mm/min, and the duration of keeping the relieved pressure is 10 s.

In this application, the powder compaction density is a compaction density measured by applying a pressure equivalent to 5 tons. The calculation formula of the compaction density is: compaction density = mass of the material specimen/(force-bearing area of the material specimen × thickness of the specimen).

3. Testing the particle size of the negative electrode material

The particle size test is performed with reference to the standard GB/T 19077-2016. A specific process is: Weighing out 1 gram of the negative electrode material as a specimen, and mixing the specimen with 20 mL of deionized water and a tiny amount of dispersant evenly; putting the mixture in an ultrasonication device, performing ultrasonication for 5 minutes, and then pouring the solution into a Hydro 2000SM feeding system for testing, wherein the test instrument is Mastersizer 3000 manufactured by Malvern. In the test process, when a laser beam passes through the dispersed particle specimens, the particle size measurement is performed by measuring the intensity of scattered light. The resulting data is then used to analyze and calculate the particle size distribution that forms the scattering pattern. $D_{v50}$ of the negative electrode material is a particle diameter value at which the cumulative volume of the specimen particles of the negative electrode material reaches 50% in a volume-based particle size distribution curve viewed from the small-diameter side. Testing each specimen of particles for three times at a refractive index of 1.8, and averaging out the three measured values to obtain the particle size.

4. Raman test for the negative electrode material

Scanning a specified area on the negative electrode material by using a laser microscope confocal Raman spectrometer (Raman, HR Evolution, HORIBA Scientific Instrument Division), obtaining the d peak and the g peak of particles in this area, processing the data by using LabSpec software to obtain the intensities of the d peak and the g peak of each particle, denoted as $I_d$ and $I_g$ respectively. Statistically analyzing the $I_d/I_g$ ratios at steps of 0.02 to obtain a normal distribution graph. Determining $(I_d/I_g)$max and $(I_d/I_g)$min of the particles, and calculating a mean value of $I_d/I_g$ ratios as the $I_d/I_g$ ratio of the negative active material. The laser wavelength of the Raman spectrometer may be in the range of 532 nm to 785 nm.

d peak: typically located near 1350 cm$^{-1}$, caused by a radial breathing mode of symmetric stretching vibration of sp$^2$ carbon atoms in an aromatic ring (reflecting structural defects).

g peak: typically located near 1580 cm$^{-1}$, caused by the stretching vibration between sp$^2$ carbon atoms, and corresponding to the vibration of E2g optical phonons at the center of the Brillouin zone (in-plane vibration of carbon atoms).

5. XRD test for the negative electrode material

Using an X-ray powder diffractometer (XRD) (model: Bruker D8 ADVANCE) to test the negative electrode material under the following conditions: the target material is Cu K$\alpha$, the voltage/current is 40 KV/40 mA, the scanning angle range is 5° to 80°, the scanning step length is 0.00836°, and the duration of each step length is 0.3 s, so as to obtain an XRD curve.

The (004) crystal plane diffraction peak, that is, the (004) peak in the XRD pattern of the negative electrode material, is exhibited at a diffraction angle 2θ of 52° to 57°. The (110) crystal plane diffraction peak, that is, the (110) peak in the XRD pattern of the negative electrode material, is exhibited at a diffraction angle 2θ of 75° to 80°. The integrated area of the (004) peak is denoted as $C_{004}$, and the integrated area of the (110) peak is denoted as $C_{110}$, so that a $C_{004}/C_{110}$ ratio of the negative electrode material is calculated.

6. Testing the gravimetric capacity and the first-cycle Coulombic efficiency

(1) Preparing a button battery: Assembling the negative electrode prepared in the above embodiment, a lithium sheet, the separator, the electrolyte solution, a steel sheet, foamed nickel, and a button battery case together to obtain a button battery. Leaving the button battery to stand for 6 hours before testing.

(2) Putting the button battery onto a LAND tester to perform a test in the following process: Discharging the button battery at a current of 0.05 C until the voltage reaches 5 mV or -5 mV, and leaving the button battery to stand for 5 min, discharging the button battery at a current of 0.05 mA until the voltage reaches 5 mV or -5 mV, discharging the button battery at a current of 0.01 mA until the voltage reaches 5 mV or -5 mV, and then charging the button battery at a current of 0.1 C until the voltage reaches 2.0 V, so as to obtain a charge capacity, and finally, dividing the charge capacity by the mass of the active material to obtain the gravimetric capacity of the negative electrode material. Dividing the charge capacity by the discharge capacity to obtain a first-cycle Coulombic efficiency.

7. Testing the capacity of the lithium-ion battery

1) Setting the test temperature to 25 °C.
2) Leaving the battery to stand for 5 min.
3) Discharging the battery at a direct current of 0.2 C until the voltage drops to 3 V.
4) Leaving the battery to stand for 5 min.
5) Charging the battery at a constant current of 0.5 C until the voltage reaches 4.48 V, and then charging the battery at a constant voltage until the current drops to 0.025 C.
6) Leaving the battery to stand for 5 min.
7) Discharging the battery at a direct current of 0.2 C until the voltage drops to 3 V.
8) Leaving the battery to stand for 5 min.
9) Repeating steps 5 to 8 for 2 times.
10) Adjusting the oven temperature to 45 °C.
11) Leaving the battery to stand for 60 min.
12) Charging the battery at a constant current of 0.5 C until the voltage reaches 4.48 V, and then charging the battery at a constant voltage until the current drops to 0.025 C.
13) Leaving the battery to stand for 5 min.
14) Discharging the battery at a direct current of 0.2 C until the voltage drops to 3.0 V.
15) Leaving the battery to stand for 5 min.
16) Repeating steps 12 to 15 for 2 times.

**Test Results**

Table 1 shows how the performance of the lithium-ion battery is affected by the cumulative volume of pores of 3 nm to 35 nm in diameter and the value of Cap A-Cap B (that is, a difference between Cap A and Cap B of the button battery prepared from the negative electrode material, wherein Cap A denotes the gravimetric capacity of the button battery discharged to a voltage of -5 mV, and Cap B denotes the gravimetric capacity of the button battery discharged to a voltage of 5 mV). In the embodiments and comparative embodiments in Table 1, the $I_d/I_g$ ratio is 0.354, $L_a$ is 114.1 nm, BET is 12.4 m$^2$/g, and the $C_{004}/C_{110}$ ratio is 3.4.

**Table 1**

| Embodiments and comparative embodiments | Cumulative volume of pores of 3 to 35 nm in diameter ($cm^3/g$) | Cap A-Cap B (mAh/g) | Capacity of lithium-ion battery (mAh) |
|---|---|---|---|
| Embodiment 1 | $21.4 \times 10^{-3}$ | 16.7 | 1579.55 |
| Embodiment 2 | $8.2 \times 10^{-3}$ | 15.1 | 1572.93 |
| Embodiment 3 | $28.4 \times 10^{-3}$ | 17.7 | 1580.99 |
| Embodiment 4 | $7.7 \times 10^{-3}$ | 14.4 | 1569.46 |
| Embodiment 5 | $14.7 \times 10^{-3}$ | 15.6 | 1578.57 |
| Embodiment 6 | $20.7 \times 10^{-3}$ | 16.1 | 1579.93 |
| Embodiment 7 | $5.4 \times 10^{-3}$ | 12.7 | 1562.92 |
| Embodiment 8 | $14.0 \times 10^{-3}$ | 15.3 | 1575.91 |
| Embodiment 9 | $10.2 \times 10^{-3}$ | 15.3 | 1575.05 |
| Embodiment 10 | $22.9 \times 10^{-3}$ | 17.6 | 1580.11 |
| Comparative Embodiment 1 | $1.4 \times 10^{-3}$ | 0.6 | 1512.66 |
| Comparative Embodiment 2 | $3 \times 10^{-3}$ | 19 | 1582.65 |
| Comparative Embodiment 3 | $20 \times 10^{-3}$ | 8 | 1575.73 |

As can be seen from Table 1, the capacity of the lithium-ion battery is relatively high when the negative electrode material of the lithium-ion battery satisfies both of the following conditions: (i) the cumulative volume of pores of 3 nm to 35 nm in diameter is $4 \times 10^{-3}$ $cm^3/g$ to $30 \times 10^{-3}$ $cm^3/g$; and (ii) the value of Cap A-Cap B is 10 mAh/g to 20 mAh/g (Cap A-Cap B is a difference between Cap A and Cap B of the button battery prepared from the negative electrode material, wherein Cap A denotes the gravimetric capacity of the button battery discharged to a voltage of -5 mV, and Cap B denotes the gravimetric capacity of the button battery discharged to a voltage of 5 mV). A speculative cause is that the graphitic negative electrode material of such characteristics provides significantly increased sites for lithiation, thereby enabling more capacity to be discharged during discharge, and increasing the energy density of the lithium-ion battery.

On the basis of Embodiment 6, Table 2 further investigates how the $I_d/I_g$ ratio of the negative electrode material affects the performance of the lithium-ion battery.

**Table 2**

| Embodiment | $I_d/I_g$ ratio | Capacity of lithium-ion battery (mAh) |
|---|---|---|
| Embodiment 6 | 0.354 | 1579.93 |
| Embodiment 11 | 0.464 | 1583.25 |
| Embodiment 12 | 0.421 | 1583.10 |
| Embodiment 13 | 0.301 | 1568.69 |
| Embodiment 14 | 0.368 | 1580.05 |
| Embodiment 15 | 0.385 | 1581.69 |
| Embodiment 16 | 0.417 | 1582.27 |
| Embodiment 17 | 0.340 | 1575.86 |
| Embodiment 18 | 0.369 | 1581.06 |
| Embodiment 19 | 0.483 | 1584.66 |
| Embodiment 20 | 0.230 | 1566.33 |

As can be seen from Table 2, Embodiments 11 to 20 exhibit a higher capacity of the lithium-ion battery. A speculative cause is that the $I_d/I_g$ ratio of the negative electrode material falls within an appropriate range, and therefore, more defects exist on the surface of the negative electrode material, more sites are available for intercalating lithium ions, and the lithiation capacity is higher, thereby leading to a high capacity of the active material and making the lithium-ion battery perform well in terms of capacity.

On the basis of Embodiment 12, Table 3 further investigates how the $L_a$ value of the negative electrode material affects the performance of the lithium-ion battery.

**Table 3**

| Embodiment | $L_a$ (nm) | Gravimetric capacity (mAh/g) | Capacity of lithium-ion battery (mAh) |
|---|---|---|---|
| Embodiment 12 | 114.1 | 356.0 | 1583.10 |
| Embodiment 21 | 118.3 | 356.1 | 1583.22 |
| Embodiment 22 | 111.0 | 355.9 | 1578.61 |
| Embodiment 23 | 132.1 | 358.3 | 1585.85 |
| Embodiment 24 | 130.0 | 358.2 | 1585.16 |
| Embodiment 25 | 124.7 | 357.3 | 1584.43 |
| Embodiment 26 | 134.8 | 358.7 | 1587.65 |
| Embodiment 27 | 108.9 | 354.8 | 1578.20 |
| Embodiment 28 | 131.5 | 358.2 | 1585.23 |
| Embodiment 29 | 124.6 | 356.5 | 1584.14 |
| Embodiment 30 | 138.0 | 358.9 | 1589.81 |

As can be seen from Table 3, when $L_a$ of the negative electrode material falls within the range of 110 nm to 140 nm, the gravimetric capacity of the negative electrode material, denoted as Cap, is greater than or equal to 355 mAh/g, and the discharge capacity of the lithium-ion battery is further increased.

On the basis of Embodiment 26, Table 4 further investigates how the $C_{004}/C_{110}$ ratio, the compaction density under a pressure of 5 tons, the BET specific surface area, and the $D_{v50}$ of the negative electrode material affect the performance of the lithium-ion battery.

**Table 4**

| Embodiment | BET $(m^2/g)$ | Powder compaction density $(g/cm^3)$ | $D_{v50}$ $(\mu m)$ | $C_{004}/C_{110}$ | First-cycle Coulombic efficiency (%) | Gravimetric capacity (mAh/g) | Capacity of lithium-ion battery (mAh) |
|---|---|---|---|---|---|---|---|
| Embodiment 26 | 12.4 | 1.78 | 8.9 | 3.4 | 87.5 | 356.7 | 1587.65 |
| Embodiment 31 | 3.7 | 1.72 | 17.1 | 3.0 | 90.1 | 358.6 | 1587.99 |
| Embodiment 32 | 8.8 | 1.75 | 11.7 | 2.6 | 89.1 | 354.4 | 1587.87 |
| Embodiment 33 | 11.8 | 1.93 | 12.6 | 3.7 | 86.7 | 354.7 | 1588.34 |
| Embodiment 34 | 10.1 | 1.84 | 16.3 | 2.9 | 88.3 | 357.5 | 1588.63 |
| Embodiment 35 | 10.6 | 1.93 | 17.9 | 3.5 | 87.0 | 356.8 | 1588.80 |
| Embodiment 36 | 10.1 | 2.07 | 18.2 | 2.1 | 87.5 | 356.9 | 1588.82 |
| Embodiment 37 | 9.6 | 1.89 | 9.8 | 1.4 | 88.6 | 359.1 | 1587.76 |
| Embodiment 38 | 9.1 | 1.89 | 25.4 | 2.6 | 89.1 | 359.1 | 1588.81 |
| Embodiment 39 | 5.9 | 1.97 | 11.1 | 2.9 | 89.4 | 354.3 | 1587.93 |
| Embodiment 40 | 4 | 1.93 | 14.7 | 2.0 | 90.7 | 356.8 | 1589.54 |
| Embodiment 41 | 8.8 | 1.91 | 13.1 | 2.0 | 89.3 | 355.9 | 1589.97 |
| Embodiment 42 | 5.2 | 1.97 | 12.8 | 2.3 | 90.0 | 354.7 | 1590.71 |
| Embodiment 43 | 5.9 | 2.09 | 14.2 | 2.5 | 89.5 | 354.0 | 1588.52 |
| Embodiment 44 | 6.4 | 1.94 | 13.9 | 2.8 | 90.7 | 353.4 | 1588.57 |

As can be seen from Table 4, the capacity of the lithium-ion battery in Embodiments 36 and 39 is superior to that in Embodiment 26. In Embodiments 31 to 32, the BET specific surface area of the negative active material falls within the range of 4 to 10 m$^2$/g, and therefore, as can be seen, in contrast to Embodiment 26, the first-cycle Coulombic efficiency is improved, and the capacity of the lithium-ion battery is also improved to some extent. In Embodiments 33 to 34, the powder compaction density under a pressure of 5 tons falls within the range of 1.8 to 2.1 g/cc, and therefore, as can be seen, in contrast to Embodiment 26, the capacity of the lithium-ion battery increases with the rise of the compaction density. In Embodiments 35 to 36, the $D_{v50}$ of the negative active material falls within the range of 10 to 20 $\mu$m, and therefore, as can be seen, with $D_{v50}$ falling within this range, the gravimetric capacity is higher than that in Embodiment 26, and the capacity of the lithium-ion battery is also higher. In Embodiments 37 to 38, the $C_{004}/C_{110}$ ratio of the negative active material falls within the range of 1 to 3, and therefore, as can be seen, the capacity of the lithium-ion battery is improved to some extent versus Embodiment 26. In Embodiments 39 to 44, the BET specific surface area, the powder compaction density under a pressure of 5 tons, $D_{v50}$, and the $C_{004}/C_{110}$ ratio of the negative active material all satisfy the specified conditions. As can be seen, the capacity of the lithium-ion battery is significantly improved, indicating that satisfaction of the specified conditions of the active material can further improve the performance of the battery.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. A negative electrode material, wherein the negative electrode material comprises a carbon-based material, and, as tested in a nitrogen adsorption-desorption test, the negative electrode material satisfies: 0.004 cm$^3$/g $\leq$ S $\leq$ 0.030 cm$^3$/g, wherein S is an adsorption volume of pores with a pore diameter of 3 nm to 35 nm in the negative electrode material; and
in a charge-discharge test of a button battery prepared by using lithium as a negative electrode and using the negative electrode material as a positive electrode, a gravimetric capacity of the negative electrode material measured when the button battery is discharged to a voltage of -5 mV is denoted as Cap A, and the gravimetric capacity of the negative electrode material measured when the button battery is discharged to a voltage of 5 mV is denoted as Cap B, satisfying: 10 mAh/g $\leq$ Cap A - Cap B $\leq$ 20 mAh/g.

2. The negative electrode material according to claim 1, wherein 0.006 cm$^3$/g $\leq$ S $\leq$ 0.025 cm$^3$/g; and/or

$$14 \text{ mAh/g} \leq \text{Cap A} - \text{Cap B} \leq 18 \text{ mAh/g}.$$

3. The negative electrode material according to claim 1, wherein, as tested in a Raman test, the negative electrode material satisfies: 0.2 $\leq$ $I_d/I_g$ $\leq$ 0.5, wherein $I_d$ is an intensity of a peak at 1350 cm$^{-1}$ in a Raman spectrum, and $I_g$ is an intensity of a peak at 1580 cm$^{-1}$ in the Raman spectrum; and/or
as tested by X-ray diffractometry, an average stacking thickness of the negative electrode material along an a-axis direction is $L_a$, satisfying: 100 nm $\leq$ $L_a$ $\leq$ 140 nm.

4. The negative electrode material according to claim 3, wherein 0.3 $\leq$ $I_d/I_g$ $\leq$ 0.5; and/or 110 nm $\leq$ $L_a$ $\leq$ 140 nm.

5. The negative electrode material according to claim 1, wherein the negative electrode material satisfies at least one of the following conditions (i) to (iv):

(i) a specific surface area of the negative electrode material is 2 cm$^2$/g to 15 cm$^2$/g;
(ii) a powder compaction density of the negative electrode material pressed with a force equivalent to 5 tons is 1.7 g/cm$^3$ to 2.2 g/cm$^3$;
(iii) $D_{v50}$ of the negative electrode material satisfies: 5 $\mu$m $\leq$ $D_{v50}$ $\leq$ 26 $\mu$m; or
(iv) as tested by X-ray diffractometry, a ratio of a peak area $C_{004}$ of a 004 crystal plane diffraction peak to a peak area $C_{110}$ of a 110 crystal plane diffraction peak of the negative electrode material satisfies: 1 $\leq$ $C_{005}/C_{110}$ $\leq$ 5.

6. The negative electrode material according to claim 5, wherein the negative electrode material satisfies at least one of the following conditions (v) to (viii):

(v) the specific surface area of the negative electrode material is 4 cm$^2$/g to 10 cm$^2$/g;

(vi) the powder compaction density of the negative electrode material pressed with a force equivalent to 5 tons is 1.8 g/cm$^3$ to 2.1 g/cm$^3$;

(vii)

$$10 \ \mu m \leq D_{v50} \leq 20 \ \mu m; \text{ or}$$

(viii)

$$1 \leq C_{004}/C_{110} \leq 3.$$

7. The negative electrode material according to claim 1, wherein a feedstock for preparing the carbon-based material comprises natural graphite and/or artificial graphite.

8. The negative electrode material according to claim 1, wherein a method for preparing the carbon-based material comprises: making a graphite material into a graphitic composite material, and then spheroidizing, coating, and carbonizing the graphitic composite material, and a feedstock for preparing the graphite material is at least one selected from natural graphite or artificial graphite.

9. A secondary battery, comprising a negative electrode, wherein the negative electrode comprises a negative current collector and a negative active material layer disposed on at least one surface of the negative current collector, and the negative active material layer comprises the negative electrode material according to any one of claims 1 to 8.

10. An electronic device, comprising the secondary battery according to claim 9.

Box plot of comparative embodiments and
embodiments

FIG. 1

## INTERNATIONAL SEARCH REPORT

| International application No. |
|---|
| **PCT/CN2022/123059** |

### A.    CLASSIFICATION OF SUBJECT MATTER

H01M4/04(2006.01)i;  H01M4/133(2010.01)n

According to International Patent Classification (IPC) or to both national classification and IPC

### B.    FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNKI, CNTXT, VEN: 电池, 负极, 阳极, 碳, 体积, 介孔, 孔径, 孔, 克容量, 比容量, 负压, 负电压, 缺陷, 结构, 储, 吸附, 扣式电池, 半电池, 测试, 拉曼, C004, C110, 比表面积, 中值粒径, D50, DV50, 石墨, 复合, 球形化, 包覆, 碳化, battery, negative , anode, carbon, volume, mesopore, pore, size, capaticty, BET, voltage, defect, structure, storage, absorpt+, coin, half, Raman, graphite, composite, coat+, spheroniz+, carboniz+

### C.    DOCUMENTS CONSIDERED TO BE RELEVANT

| Category* | Citation of document, with indication, where appropriate, of the relevant passages | Relevant to claim No. |
|---|---|---|
| X | CN 105190948 A (ENERG2 TECHNOLOGIES INC.) 23 December 2015 (2015-12-23) claims 1-32, and description, paragraphs 0111-0170, 0186-0187, 0196-0200, 0403, and 0502-0505, and figure 19 | 1-10 |
| X | CN 110112377 A (GROUP 14 TECHNOLOGIES, INC.) 09 August 2019 (2019-08-09) description, paragraphs 0111-0170, 0186-0187, 0196-0200, 0403, and 0502-0505, and figure 19 | 1-10 |
| A | US 2009023066 A1 (FUJI JUKOGYO KK) 22 January 2009 (2009-01-22) entire document | 1-10 |
| A | JP H06236755 A (OSAKA GAS CO., LTD.) 23 August 1994 (1994-08-23) entire document | 1-10 |
| A | CN 108807847 A (NINGDE CONTEMPORARY AMPEREX TECHNOLOGY CO., LTD.) 13 November 2018 (2018-11-13) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 May 2023** | **25 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/123059** |

**C.    DOCUMENTS CONSIDERED TO BE RELEVANT**

| Category* | Citation of document, with indication, where appropriate, of the relevant passages | Relevant to claim No. |
|---|---|---|
| A | CN 110993926 A (ZHENGZHOU INSTITUTE OF EMERGING INDUSTRIAL TECHNOLOGY et al.) 10 April 2020 (2020-04-10)<br>    entire document | 1-10 |
| A | CN 113437294 A (NINGDE AMPEREX TECHNOLOGY LTD.) 24 September 2021 (2021-09-24)<br>    entire document | 1-10 |
| A | WO 2022121136 A1 (GUANGDONG KAIJIN NEW ENERGY TECHNOLOGY CO., LTD.) 16 June 2022 (2022-06-16)<br>    entire document | 1-10 |

Form PCT/ISA/210 (second sheet) (July 2022)

## INTERNATIONAL SEARCH REPORT
### Information on patent family members

International application No.

**PCT/CN2022/123059**

| Patent document cited in search report | | | Publication date (day/month/year) | Patent family member(s) | | | Publication date (day/month/year) |
|---|---|---|---|---|---|---|---|
| CN | 105190948 | A | 23 December 2015 | US | 2021126251 | A1 | 29 April 2021 |
| | | | | US | 11495793 | B2 | 08 November 2022 |
| | | | | US | 2014272592 | A1 | 18 September 2014 |
| | | | | US | 2019267622 | A1 | 29 August 2019 |
| | | | | US | 10714744 | B2 | 14 July 2020 |
| | | | | WO | 2014143213 | A1 | 18 September 2014 |
| | | | | US | 2023115078 | A1 | 13 April 2023 |
| | | | | US | 2017346084 | A1 | 30 November 2017 |
| | | | | US | 10454103 | B2 | 22 October 2019 |
| | | | | CN | 105190948 | B | 26 April 2019 |
| | | | | CN | 110112377 | A | 09 August 2019 |
| CN | 110112377 | A | 09 August 2019 | US | 2014272592 | A1 | 18 September 2014 |
| | | | | WO | 2014143213 | A1 | 18 September 2014 |
| | | | | CN | 105190948 | A | 23 December 2015 |
| | | | | US | 2017346084 | A1 | 30 November 2017 |
| | | | | CN | 105190948 | B | 26 April 2019 |
| | | | | CN | 110112377 | A | 09 August 2019 |
| | | | | US | 2019267622 | A1 | 29 August 2019 |
| | | | | US | 10454103 | B2 | 22 October 2019 |
| | | | | US | 10714744 | B2 | 14 July 2020 |
| | | | | US | 2021126251 | A1 | 29 April 2021 |
| | | | | US | 11495793 | B2 | 08 November 2022 |
| US | 2009023066 | A1 | 22 January 2009 | WO | 2006118120 | A1 | 09 November 2006 |
| | | | | US | 8142930 | B2 | 27 March 2012 |
| | | | | KR | 20080000614 | A | 02 January 2008 |
| | | | | KR | 101026433 | B1 | 07 April 2011 |
| | | | | EP | 1876663 | A1 | 09 January 2008 |
| | | | | EP | 1876663 | A4 | 29 September 2010 |
| | | | | EP | 1876663 | B1 | 05 April 2017 |
| | | | | JPWO | 2006118120 | A1 | 18 December 2008 |
| | | | | JP | 5322435 | B2 | 23 October 2013 |
| | | | | CN | 101167208 | A | 23 April 2008 |
| | | | | CN | 101167208 | B | 19 September 2012 |
| JP | H06236755 | A | 23 August 1994 | None | | | |
| CN | 108807847 | A | 13 November 2018 | ES | 2898886 | T3 | 09 March 2022 |
| | | | | HUE | 057070 | T2 | 28 April 2022 |
| | | | | US | 2019334172 | A1 | 31 October 2019 |
| | | | | US | 11177477 | B2 | 16 November 2021 |
| | | | | PL | 3561913 | T3 | 31 January 2022 |
| | | | | PT | 3561913 | T | 30 November 2021 |
| | | | | EP | 3561913 | A1 | 30 October 2019 |
| | | | | EP | 3561913 | B1 | 27 October 2021 |
| CN | 110993926 | A | 10 April 2020 | None | | | |
| CN | 113437294 | A | 24 September 2021 | CN | 113437294 | B | 23 September 2022 |
| WO | 2022121136 | A1 | 16 June 2022 | CN | 12573923 | A | 30 March 2021 |

Form PCT/ISA/210 (patent family annex) (July 2022)